# EUROPÄISCHE PATENTSCHRIFT

(11) **EP 1 312 233 B1**
(45) Veröffentlichungstag und Bekanntmachung des Hinweises auf die Patenterteilung: **27.10.2004**
(21) Anmeldenummer: 01971607.5
(22) Anmeldetag: 13.08.2001
(51) Int. Cl.: H04Q 7/32

(54) **VERFAHREN ZUM EINGEBEN EINER RUFNUMMER IN EINEN RUFNUMMERNSPEICHER EINES TELEKOMMUNIKATIONS-ENDGERÄTES**
METHOD FOR INPUTTING A CALL NUMBER IN A CALL NUMBER MEMORY OF A TELECOMMUNICATION TERMINAL, TERMINAL AND TELECOMMUNICATION NETWORK FOR CARRYING OUT SAID METHOD
TERMINAL, RESEAU DE TELECOMMUNICATION ET PROCEDE POUR ENTRER UN NUMERO D'APPEL DANS UNE MEMOIRE DE NUMEROS D'APPELS

(30) Priorität: 21.08.2000 DE 10040798
(43) Veröffentlichungstag der Anmeldung: 21.05.2003
(73) Patentinhaber: SIEMENS AKTIENGESELLSCHAFT, 80333 München (DE)
(72) Erfinder: GRAF, Jürgen, 89143 Blaubeuren (DE); KLEIN, Cornel, 82041 Oberhaching (DE)
(86) Internationale Anmeldenummer: PCT/DE2001/003103
(87) Internationale Veröffentlichungsnummer: WO 2002/017661

(56) Entgegenhaltungen:
- WO-A-99/17568
- WO-A-99/29127
- US-A- 6 011 976

## Beschreibung

Die Erfindung betrifft ein Verfahren zum Eingeben einer Rufnummer in einen Rufnummernspeicher eines Telekommunikations-Endgerätes sowie ein Telekommunikations-Endgerät und ein Telekommunikationsnetz, die zur Durchführung des Verfahrens geeignet sind.

Die meisten modernen Telekommunikations-Endgeräte, insbesondere solche zur Verwendung in Mobilfunk-Telekommunikationsnetzen, besitzen einen Rufnummernspeicher, in den ein Benutzer häufig benötigte Rufnummern, meist zusammen mit einem der Rufnummer zugeordneten Namen, eingeben kann, und die anschließend durch eine Kurzwahl-Tastenkombination oder durch Auswählen des Eintrags in dem Rufnummernverzeichnis anwählbar sind.

Meist sind in dem Rufnummernspeicher eines Mobilfunk-Endgerätes bereits, wenn es an den Endbenutzer übergeben wird, eine Reihe von Service-Rufnummern, z.B. für Notfälle, für Pannenhilfe, für Auskunftsdienste etc. eingetragen. Diese Rufnummern sind meist nur innerhalb eines begrenzten geographischen Bereiches brauchbar oder sinnvoll. So ist es für einen Benutzer eines Mobilfunk-Endgerätes wie etwa eines Handys, der sich im Ausland aufhält, wenig hilfreich, wenn die im Rufnummernverzeichnis gespeicherte Rufnummer eines Pannenhilfsdienstes die seines Heimatlandes ist, oder wenn mit Hilfe der gespeicherten Rufnummer lediglich die Telefonauskunft seines Heimatlandes erreichbar ist, nicht aber die des Landes, in dem er sich aufhält.

Es ist daher wünschenswert, über ein Verfahren und über Endgeräte zu verfügen, die es einem Benutzer völlig unabhängig von seinem jeweiligen Aufenthaltsort erlauben, problemlos bestimmte Dienste anzurufen, ohne daß er deren jeweilige lokale Rufnummern kennen muß.

In US 5 719 929 wird vorgeschlagen, bestimmten Hilfs- und Notdiensten wie etwa Pannenhilfe, Notarzt, Polizei etc. weltweit standardisierte Codes zuzuordnen, die, an einem Endgerät gewählt, in den Vermittlungsstellen auf die entsprechenden lokalen Rufnummern umgesetzt werden. Der Nachteil dieses Verfahrens ist, daß es zu seiner Wirksamkeit eine weltweite Standardisierung der Codes voraussetzt, und daß alle Vermittlungsstellen ausgerüstet sein müssen, um die Umsetzung der Codes in die lokalen Nummern vorzunehmen. Der hiermit verbundene Investitionsaufwand hat die Verbreitung des Verfahrens bislang behindert.

Aus WO 98/08350 ist ein Verfahren zum Verbreiten von SMS-Nachrichten an eine Vielzahl von Endgeräten bekannt, die sich in einer gleichen MSC-Region aufhalten. Die SMS-Nachrichten werden als Text in einem Speicher der Endgeräte aufgezeichnet.

WO 98/59506 beschreibt ein Verfahren durch das der Benutzer eines Endgerätes auf seinen jeweiligen Aufenthaltsort bezogene Informationen mit Hilfe von SMS-Übertragung abrufen kann.

US 6,011,976 offenbart ein Verfahren, um aus einem Telekommunikationsnetz eine Liste von Telefonnummern per SMS an eine SIM-Karte eines Mobilfunkendgerätes herunterzuladen.

Die Aufgabe der Erfindung besteht darin, ein Verfahren und ein Endgerät anzugeben, die es einem Benutzer ermöglichen, bestimmte Dienste an beliebigen Orten der Welt anzurufen, ohne daß er sich hierfür über die lokal gültige Rufnummer dieser Dienste informieren muß, und ohne daß hierfür eine Anpassung der Vermittlungsstellen erforderlich ist.

Die Aufgabe wird gelöst durch ein Verfahren gemäß Anspruch 1.

Bei dem erfindungsgemäßen Verfahren wird eine Rufnummer, insbesondere eine Service-Rufnummer der oben angesprochenen Art, in einem Rufnummernspeicher eines Telekommunikations-Endgeräts dadurch eingegeben, daß eine Rufnummerninformation in einem Telekommunikationsnetz verbreitet wird, und daß das Endgerät eine aus der empfangenen Rufnummerninformation abgeleitete Rufnummer in dem Rufnummernspeicher aufzeichnet.

Dies erlaubt es z.B. jedem Betreiber eines Mobilfunk-Telekommunikationsnetzes, eine Rufnummer eines Telefonauskunftsdienstes, ggf. seines eigenen, in dem Telekommunikationsnetz zu verbreiten, und jedes erfindungsgemäße Endgerät, das sich in der Reichweite des Telekommunikationsnetzes aufhält, kann aus der so verbreiteten Rufnummerninformation die betreffende Rufnummer extrahieren und als Rufnummer einer Telefonauskunft in seinem Rufnummernspeicher verzeichnen. Der Benutzer eines solchen Endgerätes braucht lediglich in seinem Rufnummernverzeichnis den Eintrag der Telefonauskunft zu wählen, um, ohne daß er die tatsächliche Rufnummer des Auskunftsdienstes kennen muß, mit einem für das Netz, in dem er gegenwärtig eingebucht ist, zuständigen Auskunftsdienst verbunden zu werden.

Da das Endgerät von vorneherein die lokal gültige Nummer des Dienstes anwählt, wird die gemäß US 5 719 929 erforderliche Umsetzung der Rufnummer innerhalb des Telekommunikationsnetzes vermieden.

Die Verbreitung einer solchen Rufnummer kann periodisch durch Aussenden an alle in das Telekommunikationsnetz eingebuchten Endgeräte erfolgen. Endgeräte, die in das Gebiet des betreffenden Telekommunikationsnetzes gelangen, werden durch dieses sehr einfache Verfahren spätestens mit der erneuten Aussendung der Rufnummerninformation mit der lokal gültigen Rufnummer versorgt.

Um Endgeräte, die bereits über die lokal gültige Rufnummer verfügen, nicht mit der Verarbeitung der Rufnummerninformation ständig zu belasten, ist eine gezielte Übertragung der Rufnummerninformation nur an solche Endgeräte wünschenswert, die nicht über die lokal gültige Rufnummer verfügen oder bei denen zumindest die Möglichkeit besteht, daß sie dies nicht tun. Eine solche gezielte Übertragung kann z.B. jeweils beim Einbuchen eines Endgerätes in das Telekommunikationsnetz erfolgen. Dabei kann die Rufnummerninformation sowohl von dem Netz, in das sich das Endgerät einbucht, bereitgestellt werden, als auch von einem Heimatnetz des betreffenden Endgerätes, falls das Heimatnetz nicht das Netz ist, in das das Endgerät sich einbucht. Diese zweite Variante hat den Vorteil, daß sie vom Betreiber des Heimatnetzes angeboten werden kann, ohne daß hierzu eine Modifikation des fremden Netzes, in das das Endgerät sich einbucht, erforderlich wäre.

Ergänzend oder alternativ kann eine Rufnummerninformation auch übertragen werden, wenn das Telekommunikationsnetz einen Ortswechsel des Endgerätes feststellt. Herkömmliche Mobilfunknetze wie das GSM-Netz sind mit Verzeichnissen, einem sogenannten Home Location Register HLR und einem Visitor Location Register VLR jeweils für Endgeräte, für die das betreffende Mobilfunknetz ein Heimatnetz bzw. ein Fremdnetz darstellt, ausgerüstet, in denen zu einem Endgerät jeweils eine Ortsinformation in Verbindung mit dessen Rufnummer gespeichert ist, die den gegenwärtigen Aufenthaltsort des Endgeräts angibt. Dabei kann die Ortsauflösung dieses Eintrags für verschiedene Mobilfunk-Telekommunikationsnetze unterschiedlich sein, er bezeichnet im allgemeinen zumindest die MSC-Region, in der sich das Endgerät aufhält.

Eine Aktualisierung eines Eintrags in einem dieser Register kann jeweils von dem das Register führenden Mobilfunk-Kommunikationsnetz zum Anlaß genommen werden, eine Rufnummerninformation an das betreffende Endgerät zu senden oder zu überprüfen, ob der Ortswechsel des Endgerätes das Senden einer neuen Rufnummerninformation erforderlich macht und diese, falls erforderlich, zu senden.

Die Übertragung der Rufnummerninformation erfolgt vorzugsweise in Form einer SMS-Nachricht. Dies hat den Vorteil, daß keinerlei Erweiterungen des Signalisierungsprotokolls zwischen dem Mobilfunk-Telekommunikationsnetz und dem Endgerät erforderlich sind, und daß in denjenigen Mobilfunknetzen, die SMS unterstützen, keinerlei apparative Änderungen erforderlich sind, um das erfindungsgemäße Verfahren anwenden zu können.

Das Endgerät erkennt jeweils zweckmäßigerweise anhand einer mit der SMS-Nachricht übertragenen Kennung, ob diese eine Rufnummerninformation enthält, und nimmt, falls ja, die Aufzeichnung der daraus abgeleiteten Rufnummer vor. Diese Kennung kann z.B. in einem speziellen Symbol oder einer Symbolfolge der SMS-Nachricht bestehen. Ein solches Symbol bzw. eine solche Symbolfolge kann unter einer Vielzahl von Netzbetreibern einheitlich vereinbart werden, so daß jedes Netz, in dem sich das betreffende Endgerät aufhält, in einfacher Weise die in dem Endgerät gespeicherten Rufnummern anpassen kann. Es besteht auch die Möglichkeit, die Absenderrufnummer der SMS-Nachricht als Kennung zu nutzen. Diese Variante hat den Vorteil, daß sie keinerlei Veränderungen am SMS-Protokoll erforderlich macht.

Das erfindungsgemäße Verfahren ist sowohl zum Aktualisieren einer bereits zuvor in dem Rufnummernspeicher aufgezeichneten Rufnummer einsetzbar, als auch zum völlig neuen Eingeben einer solchen Rufnummer. Zu einer völligen Neueingabe kann es z.B. kommen, wenn ein Endgerät zum ersten Mal in Betrieb genommen wird und noch keinerlei Rufnummern darin gespeichert sind. In einem solchen Falle führt das erstmalige Einbuchen des Endgerätes in ein Netz zur Neueintragung der Rufnummern, die der in dem Netz übertragenen Rufnummerninformation entsprechen. Für den Netzbetreiber bedeutet dies, daß das bislang übliche Eintragen von eventuell betreiberspezifischen Service-Rufnummern vor der Ausgabe der Endgeräte an die Benutzer entfallen kann und so Kosten gespart werden.

Der Netzbetreiber kann die Möglichkeit der Neueintragung aber auch nutzen, um im Laufe der Lebensdauer der Endgeräte neu eingeführte Dienste oder auch z.B. die Telefonnummern von Gewerbetreibenden, die an einem Kontakt mit den Benutzern der Endgeräte interessiert sind, einzutragen. Die Aktualisierung kann das Austauschen einer Rufnummer durch eine neue umfassen, so z.B. im Falle der Nummer eines Störungs- oder Pannendienstes, wo es im Bedarfsfalle wünschenswert ist, daß immer die Nummer desjenigen Dienstes gespeichert ist, der in der geringsten Entfernung zum aktuellen Aufenthalt des Endgerätes angesiedelt ist; die Änderung kann aber auch aus einer Änderung der Vorwahl der gespeicherten Rufnummer des Dienstes bestehen. So mag es z.B. für einen Benutzer, der sich in einem fremden Land aufhält, dessen Sprache er nicht versteht, zweckmäßiger sein, seinen nationalen Telefonauskunftsdienst anzurufen als einen lokalen in seinem Aufenthaltsland. Dies wird erfindungsgemäß dadurch ermöglicht, daß das Endgerät bei Empfang einer entsprechenden Rufnummerninformation die gespeicherte Rufnummer um eine geeignete Ländervorwahl ergänzt. Eine solche Vorgehensweise ist selbstverständlich nicht nur für die Rufnummern einzelner Dienste sinnvoll, sondern insbesondere auch für von dem Benutzer in das Verzeichnis eingegebene Rufnummern von bevorzugten Gesprächspartnern.

Ausführungsbeispiele werden nachfolgend anhand der Zeichnungen näher erläutert. Es zeigen:
- Fig. 1: ein schematisches Blockdiagramm eines Mobilfunknetzes, in dem die vorliegende Erfindung anwendbar ist;
- Fig. 2: die Signalisierung zwischen Mobilfunknetz und Endgerät gemäß einer ersten Ausgestaltung des Verfahrens;
- Fig. 3: die Signalisierung zwischen Mobilfunksystem und Endgerät gemäß einer zweiten Ausgestaltung des Verfahrens; und
- Fig. 4: ein Blockdiagramm eines Mobilfunksystems zur Ausführung einer weiteren Ausgestaltung des Verfahrens.

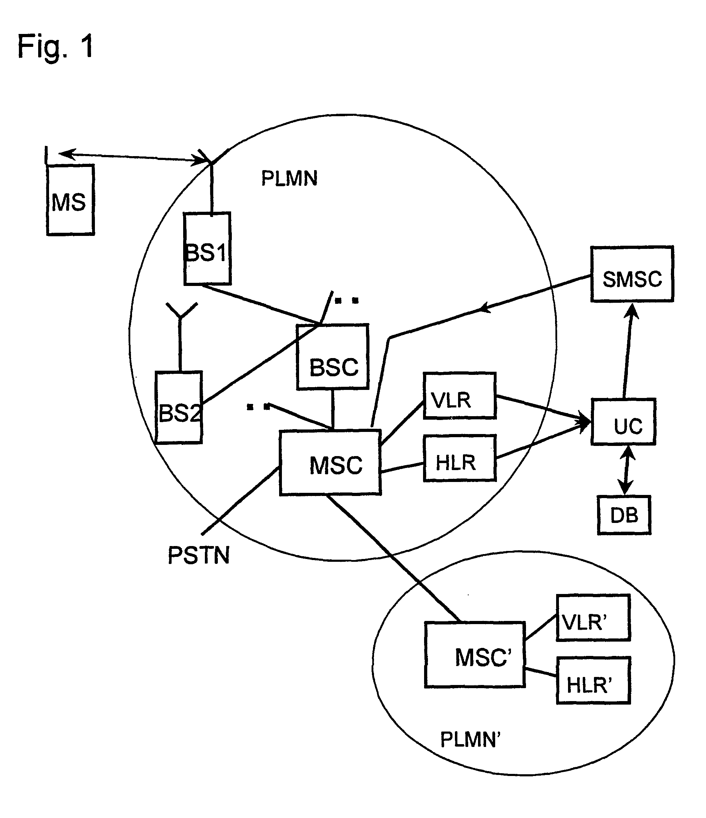

Fig. 1 zeigt die Struktur eines Telekommunikationsnetzes PLMN, genauer gesagt, eines GSM-Funk-Kommunikationssystems, bei dem das erfindungsgemäße Verfahren anwendbar ist. Das Telekommunikationsnetz PLMN umfaßt eine Vielzahl von Mobilvermittlungsstellen MSC, von denen nur eine in der Figur dargestellt ist, die untereinander vernetzt sind bzw. den Zugang zu anderen Netzen, etwa einem Festnetz PSTN und einem zweiten Funk-Kommunikationssystem PLMN' herstellen. Weiterhin sind diese Mobilvermittlungsstellungen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung V1, V2, Vk zu Teilnehmerstationen MS1, MS2, ..., MSk, ..., MSn aufbauen.

Das Telekommunikationsnetz PLMN weist ferner zwei Verzeichnisse, das sogenannte Home Location Register HLR und das Visitor Location Register VLR auf, in denen für die Mobilitätsverwaltung der einzelnen mobilen Endgeräte benötigte Informationen gespeichert sind. Die Mobilvermittlungsstellen MSC des Funk-Kommunikationssystems können einzeln oder zu mehreren jeweils einem Home Location Register oder Visitor Location Register zugeordnet sein.

Eine Aktualisierungssteuerungseinheit UC (Update Controller) ist an die zwei Register HLR bzw. VLR angeschlossen und empfängt auf diese Weise Aktualisierungsinformationen zum Standort einzelner Endgeräte, die von der Mobilvermittlungsstelle MSC an eines der zwei Register HLR oder VLR geschickt werden. Die Aktualisierungssteuerungseinheit UC ist ferner mit einer Rufnummern-Datenbank DB und einem SMS-Center SMSC verbunden, welches in der Lage ist, über die Mobilvermittlungsstelle MSC SMS-Nachrichten an die Endgeräte des Funk-Kommunikationsnetzes PLMN oder anderer Netze zu versenden.

Ein zweites Mobilfunk-Kommunikationsnetz PLMN' hat die gleichen Komponenten wie das oben beschriebene Netz PLMN. Für die Komponenten dieses Netzes werden die gleichen Bezeichnungen verwendet wie für die des Netzes PLMN, allerdings mit nachgestelltem Apostroph. Aus Gründen der Einfachheit sind nicht alle Komponenten des Netzes PLMN' in der Figur dargestellt.

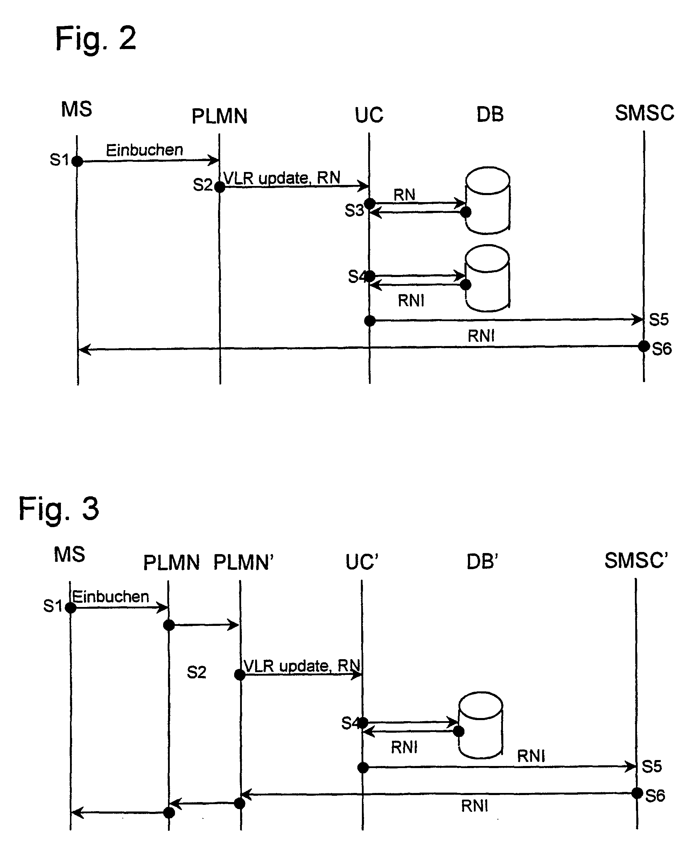

Ein erstes Verfahren zum Aktualisieren von Service-Rufnummern in einem Endgerät, das mit dem Netz PLMN durchführbar ist, wird nun anhand von Figur 2 beschrieben.

Wenn sich in Schritt S1 ein Endgerät MS in das Netz PLMN einbucht, so führt dies in an sich bekannter Weise zur Aufnahme oder Aktualisierung eines dieses Endgerät MS betreffenden Eintrages in dem Verzeichnis VLR des Netzes. Eine zu diesem Zweck an das Verzeichnis VLR signalisierte Meldung enthält eine Information über den Aufenthaltsort des Endgerätes MS zusammen mit einer das Endgerät identifizierenden Information wie etwa seiner IMSI oder seiner Rufnummer. Eine identische Meldung wird in Schritt S2 an die Aktualisierungssteuerungseinheit UC übermittelt.

Falls das Endgerät nicht in dem Netz PLMN, sondern in einem zweiten Netz wie etwa PLMN1 beheimatet ist, wird eine entsprechende Meldung auch an das Verzeichnis VLR' des Heimatnetzes PLMN' weitergegeben und dort eine Information über den Aufenthaltsort des Endgeräts im Netz PLMN gespeichert.

Die Aktualisierungssteuerungseinheit UC fragt in Schritt S3 einen bei einer früheren Einbuchung des gleichen Endgerätes MS in der Datenbank DB angelegten Datensatz ab, der eine Information über den Aufenthaltsort des Endgerätes zum Zeitpunkt der früheren Einbuchung enthält. Falls diese Ortsinformation mit der in Schritt S2 empfangenen übereinstimmt, wird davon ausgegangen, daß die in dem Endgerät SM gespeicherten Rufnummern für seinen aktuellen Aufenthaltsort geeignet sind, und das Verfahren bricht ab. Falls die Ortsinformationen unterschiedlich sind oder falls kein Eintrag zu dem Endgerät MS in der Datenbank DB vorhanden ist, wird davon ausgegangen, daß der Einsatzort des Endgerätes MS verändert worden ist, und daß in ihm gespeicherte Rufnummern nicht mehr notwendigerweise für den aktuellen Einsatzort geeignet sind.

Anstatt an die Datenbank DB könnte die Aktualisierungssteuerungseinheit UC die Anfrage des Schrittes S3 auch an das Verzeichnis VLR richten, allerdings ist es dazu erforderlich, daß entweder die Aktualisierungssteuereinheit UC die den neuen Aufenthaltsort des Endgerätes MS bezeichnende Aktualisierungsmeldung früher erhält als das Verzeichnis VLR, so daß ein früherer Aufenthaltsort des Endgerätes aus dem Verzeichnis VLR noch abgefragt werden kann, bevor dieser anhand der Aktualisierungsmeldung überschrieben wird; oder das Verzeichnis VLR muß so angepaßt sein, daß auch nach Empfang der Aktualisierungsmeldung durch das Verzeichnis VLR die einen früheren Aufenthaltsort des Endgerätes betreffende Ortsinformation aus dem Verzeichnis VLR abfragbar bleibt.

Es ist auch möglich, den Schritt S3 auszulassen und somit den nachfolgenden Schritt S4 jedesmal beim Einbuchen eines Endgerätes durchzuführen, unabhängig davon, ob sein Aufenthaltsort sich geändert hat oder nicht.

In Schritt S4 fragt die Aktualisierungssteuereinheit UC von der Datenbank DB Rufnummerninformation RNI ab, die eine oder mehrere Servicerufnummern spezifiziert, die für den aus der Ortsinformation ermittelbaren Aufenthaltsort des Endgerätes MS Gültigkeit besitzen. Diese Rufnummerninformation RNI wird in Schritt S5 an das SMS-Center SMSC übertragen, welches sie zu einer oder - falls mehr Rufnummern übertragen werden sollen, als mit der begrenzten Länge einer SMS-Nachricht übermittelt werden können - mehreren SMS-Nachrichten zusammenstellt, die in Schritt S6 über das Netz PLMN an das Endgerät MS übermittelt werden.

Auf die Art der Auswertung der SMS-Nachricht durch das Endgerät MS wird an späterer Stelle eingegangen.

Das oben beschriebene erste Verfahren ist sowohl für Endgeräte anwendbar, die das Netz PLMN als Heimatnetz haben, als auch für solche, die in einem anderen Netz wie etwa PLMN' beheimatet sind. Die Ortsinformation, die die Aktualisierungssteuereinheit UC benötigt, kann sich daher im einfachsten Fall auf die Netzzugehörigkeit des jeweiligen Endgerätes beschränken. In einem solchen Fall wird eine SMS-Nachricht, die Rufnummerninformationen enthält, jeweils für diejenigen sich einbuchenden Endgeräte erzeugt, die nicht das Netz PLMN als Heimatnetz haben. Diese erhalten somit jeweils beim Einbuchen eine SMS-Nachricht, die z.B. die in dem Netz PLMN gültigen Nummern für Notrufe, Telefonauskunft etc. spezifiziert. Die in dem Netz PLMN beheimateten Endgeräte erhalten eine solche Nachricht nur dann, wenn der in Schritt S3 durchgeführte Vergleich ergibt, daß sie zwischenzeitlich in einem fremden Netz eingebucht gewesen sind, so daß die Gefahr besteht, daß während des Aufenthalts in dem fremden Netz gespeicherte Rufnummern überschrieben worden sind und nun wieder aktualisiert werden müssen.

Eine höhere Auflösung der Ortsinformation macht das Verfahren für diverse andere Rufnummern attraktiv. Wenn z.B. die Ortsinformation zu erkennen erlaubt, in welcher Stadt sich das Endgerät zu einem gegebenen Zeitpunkt befindet, so kann es für einen Anwender des Endgerätes wertvoll sein, wenn er mit dem oben beschriebenen Verfahren beispielsweise automatisch in jeder Stadt, die er aufsucht, automatisch die Rufnummer eines örtlichen Taxidienstes, der nächstgelegenen Vertragswerkstatt seines Kraftfahrzeuges, von Restaurants, Theateroder Kinokartenreservierungsdiensten und dergleichen in sein Rufnummernverzeichnis eingetragen bekommt.

Ein zweites Verfahren, das bei einem Endgerät anwendbar ist, das sich in ein fremdes Netz einbucht, wird mit Bezug auf Fig. 3 beschrieben. Hier wird angenommen, daß das Netz PLMN' das Heimatnetz des sich in Schritt S1 in das Netz PLMN einbuchenden Endgerätes ist. Bei der Einbuchung gibt das Netz PLMN in an sich bekannter Weise eine Meldung an das Heimatnetz PLMN', die die Identität des sich einbuchenden Endgerätes MS und eine Information über seinen Aufenthaltsort enthält. Das Netz PLMN' vermerkt diese Information in seinem Home Location Register HLR'. Die gleiche Meldung wird an die Aktualisierungssteuereinheit UC' des Netzes PLMN' übertragen, die daraufhin die in der Datenbank DB' zu der Ortsinformation gespeicherte Rufnummerninformation abfragt. Die aus der Datenbank DB' abgefragte Rufnummerninformation wird in Schritt S5 weitergeleitet an das SMS-Center SMSC', das daraufhin eine SMS-Nachricht mit der Rufnummerninformation an das betreffende Endgerät MS absendet.

Die Besonderheit dieses zweiten Verfahrens liegt darin, daß die Kontrolle über die Änderung von Rufnummern in dem Verzeichnis des Endgerätes MS bei dessen Heimatnetz verbleibt und nicht dem Fremdnetz überlassen wird, in dessen Bereich sich das Endgerät MS gerade befindet. Eine solche Vorgehensweise kann unter Umständen notwendig sein, falls unterschiedliche Netzbetreiber verschiedene Formate für Rufnummerninformation enthaltende SMS-Nachrichten verwenden und sich das Endgerät MS in dem Bereich eines Netzes befindet, dessen Format es nicht verarbeiten kann. Ferner ist dieses zweite Verfahren auch dann anwendbar, wenn das Fremdnetz, in dem sich das Endgerät MS befindet, zwar SMS-Nachrichten unterstützt, selber aber keine SMS-Nachrichten mit Rufnummerninformation für eine automatische Rufnummernaktualisierung zu erzeugen in der Lage ist.

Wenn das Endgerät MS später in den Bereich seines Heimatnetzes PLMN' zurückkehrt, so kann dieses eine Rückänderung der geänderten Rufnummern gemäß dem oben beschriebenen ersten Verfahren bewirken: Die Einbuchung ins Heimatnetz PLMN' führt zu einer Änderung des dem Endgerät MS entsprechenden Eintrags in Register VLR'. Anhand der Änderung des Eintrags erkennt das Netz PLMN', daß Bedarf nach einer Rufnummeraktualisierung besteht und führt die mit Bezug auf Fig. 2 beschriebenen Schritte S2 bis S6 aus.

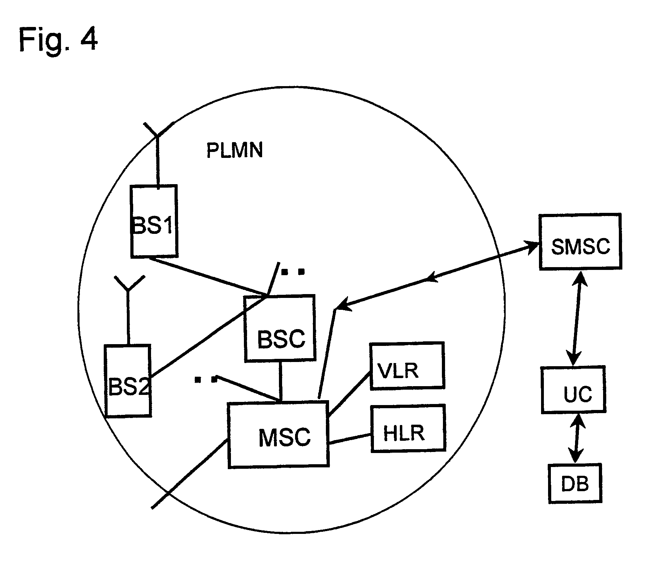

Bei dem vereinfachten Mobilfunknetz der Fig. 4 ist die Verbindung zwischen der Aktualisierungssteuereinheit UC und dem Verzeichnis VLR oder HLR entfallen. Statt dessen ist das SMS-Center SMSC über eine bidirektionale Verbindung mit der Mobilvermittlungsstelle MSC verbunden, und es kommuniziert auch bidirektional mit der Aktualisierungssteuereinheit UC.

In diesem Netz erfolgt eine Aktualisierung von in einem Endgerät MS gespeicherten Rufnummern gemäß einem dritten Verfahren, indem der Benutzer des Endgerätes eine SMS-Nachricht an das SMS-Center SMSC sendet, mit dem er seinen Wunsch nach einer Rufnummernaktualisierung zu erkennen gibt. Diese SMS-Nachricht kann eine vom Benutzer in das Endgerät eingegebene Ortsinformation enthalten, sie kann aber auch ähnlich wie im Falle der mit Bezug auf Figuren 2 und 3 beschriebenen Verfahren durch eine automatisch von dem Netz zur Verfügung gestellte Ortsinformation ergänzt werden. Ferner enthält die Nachricht die Rufnummer des sendenden Endgeräts.

Das SMS-Center SMSC übermittelt die in der Nachricht enthaltene Ortsinformation an die Aktualisierungssteuereinheit UC, die daraufhin die Datenbank DB in der gleichen Weise abfragt, wie für Schritt S4 mit Bezug auf Figuren 2 und 3 beschrieben. Die Erzeugung einer Antwort-SMS-Nachricht mit der von der Datenbank DB gelieferten Rufnummerninformation durch das SMSC und die Übertragung der SMS-Nachricht an das Endgerät MS läuft in der gleichen Weise ab, wie oben mit Bezug auf Figuren 2 und 3 beschrieben, wobei das SMSC den Empfänger der die Rufnummerninformation enthaltenden Antwortnachricht anhand der mit der anfordernden Nachricht übertragenen Absender-Rufnummer festlegt.

Die bislang beschriebenen Verfahren verwendeten jeweils SMS-Nachrichten, die spezifisch an ein bestimmtes Endgerät adressiert wurden, um dieses mit aktualisierten Rufnummern zu versorgen. Neben der Adressierung von SMS-Nachrichten an einzelne Endgeräte bieten Mobilfunknetze aber auch die Möglichkeit, solche Nachrichten an alle in das Netz eingebuchten Endgeräte zu verschicken, das sogenannte Cell Broadcast. Auch diese Funktionalität der Mobilfunknetze läßt sich gemäß einem vierten erfindungsgemäßen Verfahren für die Rufnummernaktualisierung nutzen. Bei diesem Verfahren, das ebenfalls in einem Netz mit der in Fig. 4 gezeigten Struktur anwendbar ist, werden die SMS-Nachrichten, die die Rufnummerninformation enthalten, nicht jeweils einmal beim Einbuchen eines Endgerätes in das Netz verschickt, sondern sie werden in regelmäßigen Abständen (z.B. einmal pro Minute) per Cell Broadcast an alle Endgeräte verschickt.

Ein Vorteil des dritten und des vierten Verfahrens ist, daß für ihre Anwendung keine Modifikation der HLR- bzw. VLR-Verzeichnisse bereits in Betrieb befindlicher Mobilfunknetze erforderlich ist, sie sind daher mit geringen Investitionenn in die Netz-Infrastruktur ausführbar.

Ein für die Anwendung des erfindungsgemäßen Verfahrens geeignetes Endgerät wie etwa ein Handy umfaßt in an sich bekannter Weise einen Speicher, von dem wenigstens ein Teil, der auf der SIM-Karte des Handys oder in dem Handy selbst angesiedelt ist, zum Speichern von Rufnummern vorgesehen ist. Ein weiterer Teil des Speichers ist nutzbar zum Speichern eingegangener SMS-Nachrichten. Üblicherweise werden alle von dem Handy empfangenen SMS-Nachrichten in diesem zweiten Speicherbereich wenigstens so lange gespeichert gehalten, bis ein Benutzer sie gelesen hat.

Zusätzlich hierzu umfaßt ein erfindungsgemäßes Endgerät einen Prozessor, der eingehende SMS-Nachrichten auf das Vorhandensein oder Nicht-Vorhandensein eines vorgegebenen Erkennungszeichens untersucht. Ein solches Erkennungszeichen kann z.B. ein spezielles Zeichen oder -symbol oder eine spezielle Zeichen- bzw. Symbolfolge innerhalb des Nachrichtenblocks einer SMS-Nachricht sein; vorzugsweise wird allerdings als ein solches Erkennungszeichen die ebenfalls als Teil der SMS-Nachricht übertragene Rufnummer des Absenders genutzt.

Wenn der Prozessor das Erkennungszeichen in einer SMS-Nachricht findet, so wird diese SMS-Nachricht nicht notwendigerweise in dem zweiten Speicherbereich als Text abgespeichert, sondern sie wird direkt von dem Prozessor verarbeitet, der die übertragenen Rufnummern aus der Nachricht extrahiert und die ihnen jeweils entsprechenden Rufnummern im Rufnummernspeicher des Handys einträgt bzw. überschreibt.

Es gibt mehrere Möglichkeiten, eine eindeutige Entsprechung zwischen den gespeicherten Nummern und den in der Rufnummerninformation der SMS-Nachricht enthaltenen herzustellen.

Eine erste Möglichkeit ist, daß diejenigen Rufnummern im Rufnummernspeicher des Handys, die durch SMS-Nachrichten überschreibbar sein sollen, jeweils vorgegebene Speicherplätze des Rufnummernspeichers fest zugeordnet erhalten, und daß die SMS-Nachricht jeweils allen diesen Rufnummern in der Reihenfolge ihrer Speicherplätze entsprechende Rufnummerninformation enthält. So kann z.B. festgelegt werden, daß die ersten 10 Speicherplätze des Rufnummernspeichers durch in einer SMS-Nachricht übertragene Rufnummern überschreibbar sein sollen, und von diesen Speicherplätzen ist beispielsweise der erste einer allgemeinen Notrufnummer, der zweite der Polizei, der dritte der Feuerwehr, der vierte einem Rettungsdienst, der fünfte der Telefonauskunft etc. fest zugeordnet. Entsprechend der zugeordneten Reihenfolge enthält die SMS-Nachricht nacheinander aktualisierte Telefonnummern für Notruf, Polizei, Telefonauskunft etc., die lediglich entsprechend der Reihenfolge ihres Auftretens in der Nachricht in den Rufnummernspeicher übernommen werden müssen.

Denkbar ist auch, nicht alle überschreibbaren Rufnummern, sondern nur ausgewählte jeweils durch eine SMS-Nachricht zu überschreiben; in diesem Fall kann z.B. mit Hilfe einer SMS-Nachricht, die lediglich eine aktualisierte Polizei-Rufnummer und den zugehörigen Speicherplatz 2 angibt, die entsprechende Rufnummer im Handy aktualisiert werden, die anderen, an sich überschreibbaren Rufnummern, die in der SMS-Nachricht nicht genannt waren, bleiben unverändert.

Eine weitere Möglichkeit ist, in der SMS-Nachricht anstelle einer Speicherplatznummer denjenigen Namen zu übertragen, in Verbindung mit dem die Rufnummer einem Benutzer des Handys beim Durchsuchen des Rufnummernverzeichnisses angezeigt wird. Die Decodereinheit sucht in einem solchen Fall die in der SMS-Nachricht enthaltene Bezeichnung im Rufnummernverzeichnis und überschreibt die ggf. dort zu dieser Bezeichnung gefundene mit der in der SMS-Nachricht genannten Rufnummer. Eine solche Vorgehensweise hat für den Anwender folgenden Vorteil: wenn er sicherstellen möchte, daß eine an sich überschreibbare Rufnummer in seinem Verzeichnis nicht geändert wird, so kann er durch Verändern der der Rufnummer zugeordneten Bezeichnung erreichen, daß diese bei Empfang einer SMS-Nachricht mit einer Rufnummerninformation nicht zugeordnet und somit auch nicht verändert werden kann. Konkret bedeutet dies: wenn ein Benutzer sicherstellen möchte, daß z.B. die gespeicherte Nummer der Telefonauskunft nicht automatisch geändert wird, wenn er sich im Ausland in ein fremdes Netz einbucht, so kann er eine ursprünglich möglicherweise vom Heimatnetzbetreiber vorgegebene Bezeichnung "Telefonauskunft" z.B. durch "Telefonauskunft DE" ersetzen und dadurch erreichen, daß eine SMS-Nachricht, die eine neue Rufnummer in Verbindung mit der Bezeichnung "Telefonauskunft" überträgt, keinem Eintrag seines Rufnummernverzeichnisses zugeordnet werden kann. Dies kann dazu führen, daß das Handy die SMS-Nachricht ignoriert, alternativ kann aber auch vorgesehen werden, daß eine Rufnummer in Verbindung mit der übertragenen Bezeichnung an einem bislang freien Speicherplatz des Rufnummernverzeichnisses gespeichert wird.

Eine Weiterentwicklung der oben beschriebenen Verfahren erlaubt, den Umfang der Aktualisierung von Rufnummern an die jeweiligen Bedürfnisse und Vorlieben der Benutzer anzupassen. Dies kann bei allen oben beschriebenen Verfahrensvarianten dadurch erfolgen, daß an der Aktualisierungssteuerungseinheit UC jeweils ein Teilnehmerprofil abgespeichert wird, das für den betreffenden Teilnehmer die bei einem festgestellten Ortswechsel zu aktualisierenden Rufnummern angibt.

Darüber hinaus kann bei dem dritten Verfahren, das den Abruf der die Rufnummerninformation enthaltenden SMS-Nachricht durch eine vom Endgerät MS an das SMSC gerichtete anfordernde SMS-Nachricht vorsieht, vorgesehen werden, daß die anfordernde SMS-Nachricht die zu aktualisierenden Nummern spezifiziert. Dies kann z.B. dadurch erfolgen, daß der Benutzer sich das Rufnummernverzeichnis seines Handys anzeigen läßt und darin diejenigen Einträge markiert, die er aktualisiert haben möchte, woraufhin die den markierten Einträgen entsprechenden Speicherplatznummern oder Bezeichnungen automatisch in die vom Endgerät erzeugte anfordernde SMS-Nachricht aufgenommen werden.

Auch bislang nicht im Rufnummernverzeichnis des Handysenthaltene Rufnummern können selektiv übertragen und neu aufgezeichnetz werden,. So kann z. B. vorgesehen werden, daß das Handy nicht nur bereits im Rufnummernverzeichnis gespeicherte Rufnummern zur Aktualisierung anbietet, sondern darüber hinaus auch noch diverse generische Bezeichnungen wie etwa "Hotels"; "Restaurants", "Kfz-Werkstätten" o. dgl.. Falls der Benutzer eine oder mehrere dieser Bezeichnunegn auswählt, fügt das SMSC zu der für ihn bestimmten SMS-Nachricht diejenigen Rufnummern hinzu, die für die betreffende generische Bezeichnung zu dem aktuellen Aufenthaltsort des Benutzers in der Datenbank DB verzeichnet sind.

Die Datenbank DB kann zusätzlich zu Rufnummern auch Informationen von allgemeinem, insbesondere touristischem, Interesse zu den möglichen Aufenthaltsorten enthalten, die im Falle einer Rufnummernaktualisierung automatisch oder auf Anforderung des Benutzers an dessen Handy übertragen werden. Diese Übertragung kann als zweite, von der die Rufnummerninformation enthaltenden SMS-Nachricht getrennte SMS-Nachricht erfolgen, die von dem Endgerät in herkömmlicher Weise im zweiten Speicherbereich gespeichert wird. Die Information kann auch als Teil der die Rufnummerninformation enthaltenden Nachricht übertragen werden, wobei dann der Prozessor diese Nachricht in einen die Rufnummerninformation enthaltenden Teil und einen die allgemeine Information enthaltenden Textteil zerlegt, wobei der die Rufnummerninformation enthaltende Teil wie oben beschrieben zur Aktualisierung gespeicherter Telefonnummern genutzt wird und der Textteil wie eine herkömmliche SMS-Nachricht gespeichert wird.

## Patentansprüche

1. Verfahren zum Eingeben einer Rufnummer in einen Rufnummernspeicher eines Telekommunikations-Endgeräts (MS), , wobei eine Rufnummerninformation (RNI) in einem Telekommunikationsnetz (PLMN) verbreitet wird, und das Endgerät (MS) eine aus der empfangenen Rufnummerninformation (RNI) abgeleitete Rufnummer in einem Speicher aufzeichnet, **dadurch gekennzeichnet,**
**daß** die Verbreitung der Rufnummerninformation (RNI) durch gezielte Übertragung an das Endgerät (MS) beim Einbuchen des Endgeräts in das Telekommunikationsnetz (PLMN) erfolgt und daß das Telekommunikationsnetz (PLMN) die Rufnummerninformation (RNI) an ein sich einbuchendes Endgerät (MS) sendet, für das es nicht Heimatnetz ist.

2. Verfahren nach Anspruch 1, **dadurch gekennzeichnet, daß** die Verbreitung der Rufnummerninformation (RNI) durch periodisches Aussenden an alle in das Telekommunikationsnetz (PLMN) eingebuchten Endgeräte (MS) erfolgt.

3. Verfahren nach Anspruch 1, **dadurch gekennzeichnet, daß** bei jedem Einbuchen eines Endgeräts (MS) in ein bedienendes Telekommunikationsnetz (PLMN), das nicht sein Heimatnetz ist, das Heimatnetz (PLMN') die Rufnummerninformation (RNI) an das Endgerät (MS) über das bedienende Netz (PLMN) überträgt.

4. Verfahren nach einem der Ansprüche 1 bis 3, **dadurch gekennzeichnet, daß** die Rufnummerninformation (RNI) übertragen wird, wenn das Telekommunikationsnetz (PLMN) einen Ortswechsel des Endgeräts (MS) feststellt.

5. Verfahren nach Anspruch 4, **dadurch gekennzeichnet, daß** das Telekommunikationsnetz ein Verzeichnis (HLR; VLR) über die Aufenthalte der angeschlossenen Endgeräte führt und einen Ortswechsel eines Endgerätes (MS) feststellt, wenn ein auf das Endgerät bezogener Eintrag in dem Verzeichnis (HLR; VLR) geändert wird.

6. Verfahren nach einem der Ansprüche 1 bis 3, **dadurch gekennzeichnet, daß** die Rufnummerninformation (RNI) auf eine Anforderung des Endgeräts (MS) übertragen wird.

7. Verfahren nach einem der vorhergehenden Ansprüche, **dadurch gekennzeichnet, daß** die Übertragung der Rufnummerninformation (RNI) an das Endgerät (MS) in Form einer oder mehrer SMS-Nachrichten erfolgt.

8. Verfahren nach Anspruch 7, **dadurch gekennzeichnet, daß** das Endgerät (MS) anhand einer mit der SMS-Nachricht übertragenen Kennung erkennt, daß die SMS-Nachricht eine Rufnummerninformation (RNI) enthält und die Aufzeichnung der daraus abgeleiteten Rufnummer vornimmt.

9. verfahren nach Anspruch 8, **dadurch gekennzeichnet, daß** die Kennung die Absenderrufnummer der SMS-Nachricht ist.

10. Verfahren nach einem der vorhergehenden Ansprüche, **dadurch gekennzeichnet, daß** es zum Aktualisieren einer bereits zuvor in dem Rufnummernspeicher aufgezeichneten Rufnummer eingesetzt wird.

11. Verfahren nach Anspruch 10, **dadurch gekennzeichnet, daß** die Aktualisierung die Ersetzung der gespeicherten Nummer durch eine neue beinhaltet.

12. Verfahren nach Anspruch 11, **dadurch gekennzeichnet, daß** die Aktualisierung eine Änderung der Vorwahl der gespeicherten Nummer beinhaltet.

13. Verfahren nach einem der Ansprüche 1 bis 9, **dadurch gekennzeichnet, daß** es zum Neuaufzeichnen einer Rufnummer eingesetzt wird.

14. Verfahren nach einem der vorhergehenden Ansprüche, **dadurch gekennzeichnet, daß** es zum Eingeben wenigstens einer der folgenden Rufnummern eingesetzt wird:
- eines Auskunftsdienstes,
- eines Notfalldienstes.

## Claims

1. Method for inputting a call number into a call number memory of a telecommunications terminal (MS), with call number information (RNI) being disseminated in a telecommunications network (PLMN), and the terminal (MS) recording a call number, which is derived from the received call number information (RNI), in a memory,
**characterized**
**in that** the call number information (RNI) is disseminated by specific transmission to the terminal (MS) when that terminal registers in the telecommunications network (PLMN),
and **in that** the telecommunications network (PLMN) sends the call number information (RNI) to a registering terminal (MS) for which it is not the home network.

2. Method according to Claim 1, **characterized in that** the call number information (RNI) is disseminated by periodic transmission to all the terminals (MS) which are registered in the telecommunications network (PLMN).

3. Method according to Claim 1, **characterized in that**, whenever a terminal (MS) registers in a controlling telecommunications network (PLMN) which is not its home network, the home network (PLMN') transmits the call number information (RNI) to the terminal (MS) via the controlling network (PLMN).

4. Method according to one of Claims 1 to 3, **characterized in that** the call number information (RNI) is transmitted when the telecommunications network (PLMN) finds that the position of the terminal (MS) has changed.

5. Method according to Claim 4, **characterized in that** the telecommunications network maintains a directory (HLR; VLR) of the locations of the connected terminals, and finds that the position of a terminal (MS) has changed when an entry relating to the terminal in the directory (HLR;VLR) is changed.

6. Method according to one of Claims 1 to 3, **characterized in that** the call number information (RNI) is transmitted on request by the terminal (MS).

7. Method according to one of the preceding claims, **characterized in that** the call number information (RNI) is transmitted to the terminal (MS) in the form of one or more SMS messages.

8. Method according to Claim 7, **characterized in that** the terminal (MS) uses an identifier which is transmitted with the SMS message to identify that the SMS message contains call number information (RNI), and records the call number which is derived from this message.

9. Method according to Claim 8, **characterized in that** the identifier is the sender call number of the SMS message.

10. Method according to one of the preceding claims, **characterized in that** said method is used for updating a call number which has already previously been recorded in the call number memory.

11. Method according to Claim 10, **characterized in that** the updating process includes the replacement of the stored number by a new number.

12. Method according to Claim 11, **characterized in that** the updating process includes a change to the dialling code of the stored number.

13. Method according to one of Claims 1 to 9, **characterized in that** said method is used for new-recording of a call number.

14. Method according to one of the preceding Claims, **characterized in that** said method is used for inputting at least one of the following call numbers;
- an information service,
- an emergency service.

## Revendications

1. Procédé permettant d'entrer un numéro d'appel dans une mémoire de numéros d'appel d'un terminal de télécommunication (MS), une information (RNI) concernant les numéros d'appel étant distribuée dans un réseau de télécommunication (PLMN) et le terminal (MS) stockant dans une mémoire un numéro d'appel déduit de l'information (RNI) reçue concernant les numéros d'appel
**caractérisé par le fait**
**que** la distribution de l'information (RNI) concernant les numéros d'appel se fait par transmission sélective au terminal (MS) lors de l'enregistrement du terminal dans le réseau de télécommunication (PLMN) et
**que** le réseau de télécommunication (PLMN) envoie l'information (RNI) concernant les numéros d'appel à un terminal (MS) qui s'enregistre et pour lequel le réseau de télécommunication (PLMN) n'est pas le réseau d'origine.

2. Procédé selon la revendication 1 **caractérisé par le fait que** la distribution de l'information (RNI) concernant les numéros d'appel se fait par émission périodique à tous les terminaux (MS) enregistrés dans le réseau de télécommunication (PLMN).

3. Procédé selon la revendication 1 **caractérisé par le fait que**, lors de chaque enregistrement d'un terminal (MS) dans un réseau de télécommunication (PLMN), qui le sert et qui n'est pas son réseau d'origine, le réseau d'origine (PLMN') transmet l'information (RNI) concernant les numéros d'appel au terminal (MS) par l'intermédiaire du réseau (PLMN) qui le sert.

4. Procédé selon l'une des revendications 1 à 3 **caractérisé par le fait que** l'information (RNI) concernant les numéros d'appel est transmise quand le réseau de télécommunication (PLMN) constate un changement de localisation du terminal (MS).

5. Procédé selon la revendication 4 **caractérisé par le fait que** le réseau de télécommunication entretient un répertoire (HLR; VLR) relatif aux lieux de séjour des terminaux qui lui sont raccordés et constate un changement de localisation d'un terminal (MS) lorsqu'une inscription relative au terminal est modifiée dans le répertoire (HLR; VLR).

6. Procédé selon l'une des revendications 1 à 3 **caractérisé par le fait que** l'information (RNI) concernant les numéros d'appel est transmise sur une requête du terminal (MS).

7. Procédé selon l'une des revendications précédentes **caractérisé par le fait que** la transmission au terminal (MS) de l'information (RNI) concernant les numéros d'appel se fait sous la forme d'un ou de plusieurs messages SMS.

8. Procédé selon la revendication 7 **caractérisé par le fait que** le terminal (MS) reconnaît, à l'aide d'une identification transmise avec le message SMS, que le message SMS renferme une information (RNI) concernant les numéros d'appel et procède à la mémorisation des numéros d'appel qui en sont déduits.

9. Procédé selon la revendication 8 **caractérisé par le fait que** l'identification est le numéro d'appel de l'expéditeur du message SMS.

10. Procédé selon l'une des revendications précédentes **caractérisé par le fait qu'**il est utilisé pour actualiser un numéro d'appel déjà stocké auparavant dans la mémoire de numéros d'appel.

11. Procédé selon la revendication 10 **caractérisé par le fait que** l'actualisation comprend le remplacement du numéro stocké par un nouveau numéro.

12. Procédé selon la revendication 11 **caractérisé par le fait que** l'actualisation comprend une modification du préfixe du numéro stocké.

13. Procédé selon l'une des revendications 1 à 9 **caractérisé par le fait qu'**il est utilisé pour la mémorisation d'un nouveau numéro supplémentaire.

14. Procédé selon l'une des revendications précédentes **caractérisé par le fait qu'**il est utilisé pour entrer au moins l'un des numéros d'appel suivants:
- celui d'un service de renseignements,
- celui d'un service de secours.
